# EUROPEAN PATENT SPECIFICATION

(11) **EP 3 540 239 B1**
(45) Date of publication and mention of the grant of the patent: **01.11.2023**
(21) Application number: 17868774.5
(22) Date of filing: 07.09.2017
(51) Int. Cl.: F04D 29/00, F04D 13/06, H02K 5/22, H02K 7/14, H02K 11/33, F04D 29/58

(54) **ELECTRICALLY DRIVEN PUMP**
ELEKTRISCH ANGETRIEBENE PUMPE
POMPE ACTIONNÉE ÉLECTRIQUEMENT

(30) Priority: 11.11.2016 JP 2016221042
(43) Date of publication of application: 18.09.2019
(73) Proprietor: Shinano Kenshi Co., Ltd., Ueda-shi, Nagano 386-0498 (JP)
(72) Inventor: MIYASAKA, Takeshi, Ueda-shi Nagano 386-0498 (JP)
(74) Representative: Haseltine Lake Kempner LLP
(86) International application number: PCT/JP2017/032271
(87) International publication number: WO 2018/088010

(56) References cited:
- EP-A2- 2 903 141
- DE-B3-102015 114 783
- JP-A- H03 111 700
- JP-A- H11 166 500
- JP-A- 2000 073 962
- JP-A- 2004 068 724
- JP-A- 2004 316 548
- JP-A- 2004 316 548
- JP-A- 2012 026 398
- US-A1- 2008 240 947
- US-A1- 2011 254 410
- US-A1- 2015 361 991

## Description

### [TECHNICAL FIELD]

The present invention relates to an electric pump.

### [BACKGROUND ART]

There is known an electric pump in which a motor rotates an impeller. In such an electric pump, an impeller housing portion housing the impeller is positioned at one side with respect to a motor housing portion housing the motor in a direction of a rotation axis of the motor, an introduction pipe portion introducing fluid to the impeller is positioned at one side with respect to the impeller housing portion, and a printed circuit board electrically connected to a coil of the motor is positioned at the other side of the motor housing portion (see, for example, Patent Documents 1 and 2). Patent Document 3 discloses an electric pump for a coolant circuit of an internal combustion engine, having a radially accelerating pump impeller and a spiral housing section of a pump housing. A control circuit is arranged about an inlet on the side of the pump housing opposing the electric engine, and is accommodated in an ECU chamber. Patent Document 4 discloses a further prior art electric pump.

### [PRIOR ART DOCUMENT]

### [PATENT DOCUMENT]

[Patent Document 1] Japanese Unexamined Patent Application Publication No. 2016-3580
[Patent Document 2] Japanese Unexamined Patent Application Publication No. 2016-23635
[Patent Document 3] DE102015114783B3 [Patent Document 4] JP2004316548A

### [SUMMARY OF THE INVENTION]

### [PROBLEMS TO BE SOLVED BY THE INVENTION]

However, the arrangement of the printed circuit board at the above-mentioned position might increase the size of the electric pump in the rotation axis direction of the motor. In addition, since the coil of the motor is electrically connected to the printed circuit board and the printed circuit board is arranged near the coil, the printed circuit board and electronic parts mounted thereon might be increased in temperature.

The present invention has been made in view of the above problems and has an object to provide an electric pump that suppresses an increase in size in a direction of a rotation axis of a motor and suppresses an increase in temperature of a printed circuit board and an electronic part mounted thereon.

### [MEANS FOR SOLVING THE PROBLEMS]

The present invention is defined in claim 1, to which reference should now be made. Optional embodiments are defined in the dependent claims.

### [EFFECTS OF THE INVENTION]

According to the present invention, it is possible to provide an electric pump that suppresses an increase in size in a direction of a rotation axis of a motor and suppresses an increase in temperature of a printed circuit board and an electronic part mounted thereon.

### [BRIEF DESCRIPTION OF THE DRAWINGS]

FIG. 1A is a top view of an electric pump which does not embody the present invention but which is useful for understanding it, and FIG. 1B is a side view of the electric pump;
FIG. 2 is a cross-sectional view taken along line A-A of FIG. 1A;
FIG. 3A is a top view of a case, and FIG. 3B is a cross-sectional view taken along line B-B of FIG. 3A;
FIG. 4A is a bottom view of a printed circuit board, and FIG. 4B is a side view of the printed circuit board; and
FIG. 5A is a top view of a case of an electric pump in accordance with the invention, and FIG. 5B is a cross-sectional view taken along line C-C of FIG. 5A.

### [MODES FOR CARRYING OUT THE INVENTION]

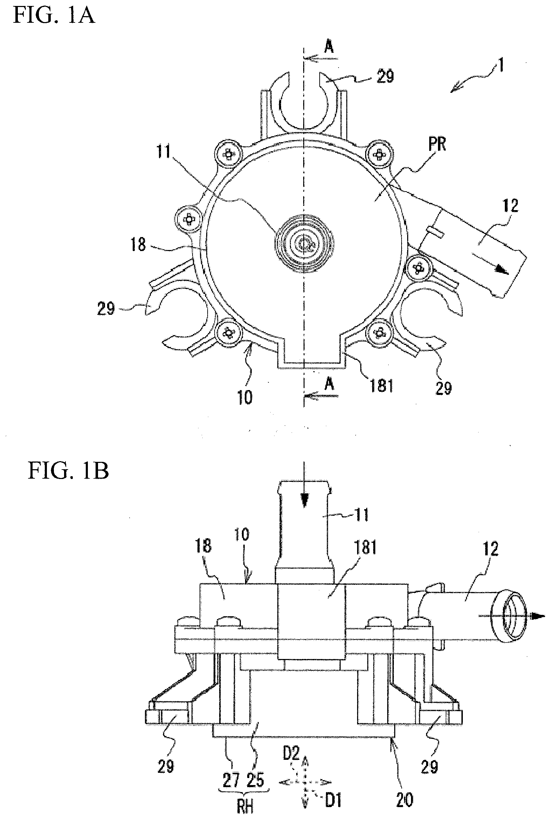

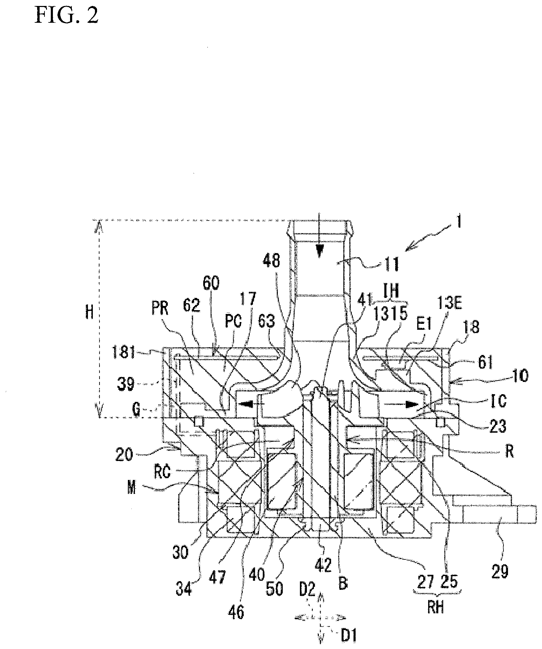

Before describing the invention, by way of explanation reference will be made to an electric pump 1 which does not embody the invention, as shown in FIG. 1A, which is a top view of the electric pump 1, and FIG. 1B, which is a side view of the electric pump 1. FIG. 2 is a cross-sectional view taken along line A-A of FIG. 1A. The electric pump 1 includes cases 10 and 20 fixed to each other. In the case 20, a motor housing portion RH that houses the motor M is formed. The motor M includes a rotor R, an iron core 30, and a plurality of coils 34 wound around the iron core 30. The motor housing portion RH defines a rotor chamber RC in which the rotor R is rotatably housed. The rotor R includes an impeller portion 48 which will be described in detail later. The impeller portion 48 is housed in an impeller chamber IC defined by an impeller housing portion IH of the case 10. In addition, a printed circuit board 60 is electrically connected to the coils 34 via a conductive pin 39, and the printed circuit board 60 is arranged at the side of the case 10. On the printed circuit board 60, a driving circuit that controls energization states of the coils 34 to control the motor M is mounted. In addition, the case 10 is formed with an introduction pipe portion 11 that introduces fluid into the impeller housing portion IH and a discharge pipe portion 12 that discharges the fluid from the impeller housing portion IH. Specifically, the fluid is a liquid, but it may be a gas. The case 10 may be made of a metal such as aluminum or brass, or may be made of a synthetic resin with high thermal conductivity.

The case 20, having a substantially concave shape in cross section, includes: a peripheral wall portion 25 having a substantially cylindrical shape so as to surround the outer periphery of the rotor R; and a bottom wall portion 27 having a substantially plate shape and supporting the rotor R for rotation, and is made of, for example, synthetic resin. The peripheral wall portion 25 and the bottom wall portion 27 define the motor housing portion RH. The case 20 is insert molded with the iron core 30, a shaft member 40 supporting the rotor R for rotation, and a collar member 50 fixed to an end portion 42 of the shaft member 40. The iron core 30, the coils 34, and a part of the conductive pin 39 are buried in the peripheral wall portion 25. The end portion 42 of the shaft member 40 and the collar member 50 are buried in the bottom wall portion 27.

The rotor R includes: a holding member 47 rotatably supported via a bearing B fitted around the shaft member 40 described above; and a plurality of permanent magnets 46 held at a base end side of the holding member 47 and facing the peripheral wall portion 25 of the case 20. The impeller portion 48 that draws fluid from the introduction pipe portion 11 and discharges the fluid to the discharge pipe portion 12 is formed at a distal end side of the holding member 47. The impeller portion 48 is positioned at the side of an end portion 41 of the shaft member 40. Electric current flowing through the coils 34 excites the iron core 30 to have predetermined polarities, so that the magnetic force acting between the iron core 30 and the permanent magnets 46 causes the rotor R to rotate. Thus, the impeller portion 48 rotates. In this specification, the direction of the rotation axis of the motor M is referred to as an axial direction D1, and the radial direction of the motor M orthogonal to the axial direction D1 is referred to as a radial direction D2.

Additionally, the case 20 is provided with fixing portions 29 each having a substantially C-shape and protruding outwardly in the radial direction D2 from the peripheral wall portion 25. The fixing portions 29 each has a function for fixing the electric pump 1 to another member.

As illustrated in FIG. 2, the case 10 is fixed to the case 20 at one side with respect to the case 20 in the axial center direction D1, in particular, at the side where the impeller portion 48 is positioned. The case 10 is integrally formed with the introduction pipe portion 11, an upper wall portion 13, a peripheral wall portion 15, a fixed wall portion 17, and a surrounding wall portion 18. The introduction pipe portion 11 extends toward the case 20 in the axial direction D1. Also, the discharge pipe portion 12 is adjacent to the introduction pipe portion 11 and is positioned at the same side with respect to the case 20. The upper wall portion 13 curves from the introduction pipe portion 11 and extends outwardly in the radial direction D2. The peripheral wall portion 15 extends from the upper wall portion 13 toward the case 20 in the axial direction D1. The upper wall portion 13 and the peripheral wall portion 15 define the impeller housing portion IH. The fixed wall portion 17 extends outwardly in the radial direction D2 from the peripheral wall portion 15 and is fixed to an upper surface 23 of the case 20. The surrounding wall portion 18 is positioned outside the peripheral wall portion 15 in the radial direction D2 and stands from the fixed wall portion 17. The surrounding wall portion 18 has a substantially circular shape as illustrated in FIG. 1A, and is partially provided with a protruding wall portion 181 protruding outwardly in the radial direction D2.

The upper wall portion 13 is curved to increase its diameter toward the outer side in the radial direction D2 so as to correspond to the shape of the impeller portion 48 and faces the impeller portion 48 in the axial direction D1. The peripheral wall portion 15 is positioned outside the impeller portion 48 in the radial direction D2. Specifically, the impeller chamber IC is defined by the impeller housing portion IH of the case 10 and the upper surface 23 of the case 20.

A cutout portion 63 receiving the introduction pipe portion 11 is formed in the central portion of the printed circuit board 60. Further, the printed circuit board 60 faces the impeller housing portion IH and is arranged within a board chamber PC defined by the upper wall portion 13, the peripheral wall portion 15, the fixed wall portion 17, and the surrounding wall portion 18. The printed circuit board 60 has a surface 61 at the side of the motor housing RH and a surface 62 opposite to the surface 61. Most of electronic parts, such as an electronic part E1, mounted on the printed circuit board 60 and having a high height or requiring heat dissipation are mounted on the surface 61.

A part of the conductive pin 39 extends into the board chamber PC surrounded by the surrounding wall portion 18 and is connected to the printed circuit board 60. A potting resin PR is filled within the board chamber PC and is cured together with the printed circuit board 60, the electronic parts E1 to E3 described later, the conductive pin 39, and the like, so that these parts are sealed. This ensures waterproofness, dustproofness and external impact resistance of these parts. This also suppresses an increase in rattling of the printed circuit board 60 within the board chamber PC and suppresses an increase in noise at the time when the impeller portion 48 stirs liquid.

As illustrated in FIG. 2, the printed circuit board 60 is arranged within a range of a height H from the upper surface 23 of the case 20 to the upper end of the introduction pipe portion 11 in the axial direction D1. Specifically, the printed circuit board 60 is arranged in the vicinity of the impeller housing portion IH and faces the impeller housing portion IH and the introduction pipe portion 11. This suppresses an increase in size of the electric pump 1 in the axial direction D1.

Further, since the fluid flows through the impeller chamber IC and the introduction pipe portion 11, heat can be transferred from the printed circuit board 60 and the electronic parts E1 to E3 to the fluid via the potting resin PR, the upper wall portion 13, and the like. It is thus possible to suppress an increase in temperature of the printed circuit board 60 and the electronic parts E1 to E3 mounted thereon and described later in detail. Further, since the cutout portion 63 for receiving the introduction pipe portion 11 is formed in the printed circuit board 60, the printed circuit board 60 can be arranged closely to the impeller housing portion IH as much as possible. As a result, heat can be efficiently transferred from the printed circuit board 60 and the electronic parts E1 to E3 to the fluid flowing through the impeller chamber IC. This further suppresses the increase in temperature of the printed circuit board 60 and the electronic parts E1 to E3.

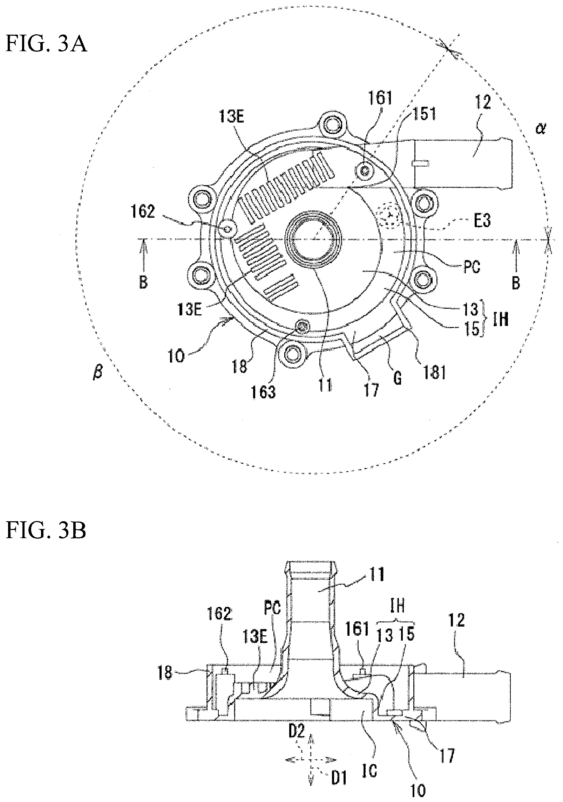

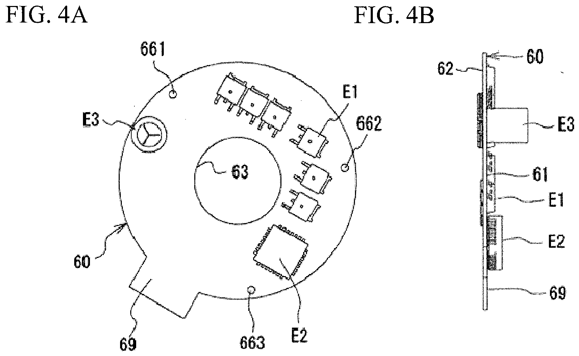

Next, the structure of the printed circuit board 60 will be described in detail. FIG. 3A is a top view of the case 10. FIG. 3B is a cross-sectional view taken along line B-B of FIG. 3A. FIGs. 3A and 3B illustrate only the case 10 before the printed circuit board 60 is assembled thereinto. When viewed in the axial direction D1 of the motor M as illustrated in FIG. 3A, the impeller housing portion IH has such a spiral shape that its diameter about the rotation axis of the motor M gradually increases in the clockwise direction from a spiral start point 151 where the discharge pipe portion 12 and the peripheral wall portion 15 are connected to each other. However, the impeller housing portion IH may have a circular shape. The discharge pipe portion 12 extends outwardly from the impeller housing portion IH and extends outwardly from the inside of the surrounding wall portion 18. FIG. 4A is a bottom view of the printed circuit board 60. FIG. 4B is a side view of the printed circuit board 60. On the surface 61 of the printed circuit board 60, a plurality of the electronic parts E1 to E3 with different heights are mounted. The electronic parts E1 to E3 such as a transistor, a capacitor, and a coil are provided for driving the motor M. As illustrated in FIG. 4B, the electronic part E1 is the lowest, and the electronic part E3 is the tallest, among the electronic parts E1 to E3. The electronic parts E1 and E2 face the upper wall portion 13 of the impeller housing portion IH in the axial direction D1. The electronic part E3 faces the peripheral wall portion 15 of the impeller housing portion IH in the radial direction D2. Further, the printed circuit board 60 has a connector portion 69 protruding outwardly in the radial direction D2 from a substantially circular portion. The distal end of the conductive pin 39 is connected to the connector portion 69.

Three holes 661 to 663 are formed in the vicinity of the outer edge of the printed circuit board 60. As illustrated in FIG. 3A, three support pins 161 to 163 extending in the axial direction D1 and arranged at substantially equal intervals about the axis are provided and are surrounded by the surrounding wall portion 18. The support pins 161 to 163 are respectively fitted into the holes 661 to 663, so the printed circuit board 60 is supported by the support pins 161 to 163. The support pin 161 is formed on the discharge pipe portion 12. A support pin 162 is formed in the impeller housing portion IH, specifically, between the surrounding wall portion 18 and the peripheral wall portion 15. The support pin 163 is formed between the surrounding wall portion 18 and the peripheral wall portion 15 but is close to the surrounding wall portion 18 and distant from the peripheral wall portion 15. The support pins 161 and 162 are examples of board supporting portions.

In addition, a plurality of support ribs 13E protruding to one side in the axial direction D1 and supporting the electronic parts E1 and E2 are provided on a part of the upper wall portion 13 and the discharge pipe portion 12. The support rib 13E is an example of a part supporting portion. The plurality of support ribs 13E are arranged substantially in parallel but are not limited to such a shape. For example, the support rib 13E may have a cylindrical shape or a prismatic shape. Here, a temperature of the electronic parts E1 to E3 for driving the motor M is generally higher than a temperature of the fluid flowing in the impeller chamber IC. Therefore, the fluid flowing in the impeller chamber IC causes the support rib 13E to be maintained at a temperature lower than the temperature of the electronic parts E1 and E2. Accordingly, the electronic parts E1 and E2 can be cooled, and an increase in temperature of the electronic parts E1 and E2 can be suppressed. In addition, silicon or heat dissipation sheet with a high thermal conductivity may be interposed between the electronic parts E1 and E2 and the support rib 13E.

Also, when the printed circuit board 60 is assembled into the case 10, the printed circuit board 60 can be stably supported by the support ribs 13E together with the support pins 161 to 163. This facilitates the operation of assembling the printed circuit board 60 into the case 10 and facilitates the operation of filling the potting resin PR into the board chamber PC.

A dotted line in FIG. 3A indicates a position where the electronic part E3 is arranged. The electronic part E3 that is the tallest among the electronic parts mounted on the printed circuit board 60 is arranged outside the peripheral wall portion 15 in the radial direction D2. This effectively prevents an interference between the electronic part E3 and the impeller housing portion IH and suppresses the increase in size of the electric pump 1 in the axial direction D1 while effectively utilizing a dead space. Further, as illustrated in FIG. 3A, the electronic part E3 is positioned within a range of α degrees, specifically, about 60 degrees, in the clockwise direction from the spiral start point 151. Here, although the peripheral wall portion 15 of the impeller housing portion IH gradually increases in diameter in the clockwise direction from the spiral start point 151, the diameter of the peripheral wall portion 15 is comparatively small within the above range. The tall electronic part E3 is arranged outside the region where the diameter of the peripheral wall portion 15 is small in the radial direction D2 in this way, so the increase in size of the electric pump 1 in the radial direction D2 is also suppressed. Further, not only the electronic parts E1 and E2 but also the electronic part E3 are mounted on the surface 61 of the printed circuit board 60 in the vicinity of the impeller housing portion IH, whereby the increase in temperature is suppressed.

As illustrated in FIG. 2, the conductive pin 39 has such a substantial L-shape as to extend outwardly in the radial direction D2 from the coil 34, to be bent in the middle thereof, and to extend toward the printed circuit board 60 in the axial direction D1. The distal end of the conductive pin 39 is connected to the connector portion 69 illustrated in FIG. 4A through a gap G between the protruding wall portion 181 and the fixed wall portion 17 illustrated in FIG. 3A. The connector portion 69 overlaps the gap G and is arranged to correspond to the protruding wall portion 181. The connector portion 69 is positioned outside the impeller housing portion IH in the radial direction D2. Likewise, the conductive pin 39 extends and is positioned outside the impeller housing portion IH in the radial direction D2. It is therefore possible to ensure the electrical conductivity between the connector portion 69 and the printed circuit board 60 positioned at the same side with respect to the motor housing portion RH without the interference of the conductive pin 39 with the impeller housing portion IH. In addition, the connector portion 69 is positioned to recede from the discharge pipe portion 12 and the electronic parts E1 to E3, whereby the electrical conductivity of the conductive pin 39 is ensured without interfering with the discharge pipe portion 12 and the electronic parts E1 to E3.

As illustrated in FIG. 3A, the gap G, that is, the connector portion 69 is positioned in the range from α degrees to β degrees in the clockwise direction from the spiral start point 151 about the rotation axis of the motor M, specifically, about 60 degrees to 360 degrees, and the electronic part E3 is positioned in the range from the spiral start point 151 to about 60 degrees in the clockwise direction as described above. Thus, the electrical conductivity between the printed circuit board 60 and the coils 34 can be ensured without interfering with the conductive pin 39 and the electronic part E3. In addition, the conductive pin 39 is substantially L-shaped in cross-section, but not limited thereto. A conductive coil or another member may be used instead of the conductive pin 39. The conductive pin 39 is an example of a conductive member.

Further, all of the rotor R, the case 20, and the printed circuit board 60 can be assembled into from the same side to the case 10 in the electric pump 1. This improves the assembling workability of the electric pump 1.

In addition, the outer peripheral edge of the printed circuit board 60 is surrounded by the surrounding wall portion 18 defining the board chamber PC. Therefore, even before the board chamber PC is filled with the potting resin PR, an operator can handle the case 10 and the electric pump 1 without directly touching the printed circuit board 60. This also improves workability.

As illustrated in FIG. 2, the surrounding wall portion 18 surrounds at least a part of the introduction pipe portion 11 together with the printed circuit board 60. Specifically, the surrounding wall portion 18 surrounds a root portion of the introduction pipe portion 11 and the vicinity of a boundary between the introduction pipe portion 11 and the impeller housing portion IH. Further, as illustrated in FIG. 3A, the surrounding wall portion 18 surrounds a root portion of the discharge pipe portion 12 and the vicinity of a boundary between the discharge pipe portion 12 and the impeller housing portion IH. Thus, when an external impact is applied to the electric pump 1, the impact on the printed circuit board 60 can be suppressed, and the impact is also suppressed from being applied to the root portions of the introduction pipe portion 11 and the discharge pipe portion 12. This suppresses damage to the printed circuit board 60, the introduction pipe portion 11, and the discharge pipe portion 12.

In the above example, the surrounding wall portion 18 surrounding the printed circuit board 60 is formed integrally in the case 10. Therefore, the number of parts is suppressed as compared with the case where the surrounding wall portion is formed separately from the case 10.

In the above example, the potting resin PR is filled and cured within the board chamber PC, but examples are not limited thereto. For example, a lid having a cutout portion for receiving the introduction pipe portion 11 may be attached to the case 10. In this case, like the above example, the surrounding wall portion defining the board chamber PC may be formed integrally with the case 10 or the lid. With this arrangement, the outer periphery of the impeller housing portion IH is surrounded, so the noise from the impeller portion 48 can be suppressed.

In the above example, the printed circuit board 60 is preferably close to the impeller housing portion IH in view of suppression of the increase in temperature, but it may be arranged within the height H illustrated in FIG. 2A. This is because the size increase in the axial direction D1 is suppressed.

The board supporting portion for supporting the printed circuit board may be provided only in the discharge pipe portion 12 or only in the upper wall portion 13. Likewise, the part supporting portion for supporting the electronic part may be provided only in the discharge pipe portion 12 or only in the upper wall portion 13.

In the above example, as illustrated in FIGS. 2 and 3B, the upper wall portion 13 of the impeller housing portion IH in the axial direction D1 increases in height as it approaches the inner side from the outer side in the radial direction D2, that is, as it approaches the introduction pipe portion 11. Therefore, for example, a plurality of electronic parts having different heights may be mounted on the surface 61 of the printed circuit board 60, a low electronic part may be arranged close to the introduction pipe portion 11, and a tall electronic part may be arranged away from the introduction pipe portion 11 as compared with the low electronic part. As a result, the increase in size in the axial direction D1 is suppressed. Further, in this case, the tall electronic part may be arranged outside the impeller housing portion IH in the radial direction D2.

The peripheral wall portion 15 and the surrounding wall portion 18 may be achieved by a common wall portion. That is, a single peripheral wall portion may define the impeller housing portion IH and the board chamber PC.

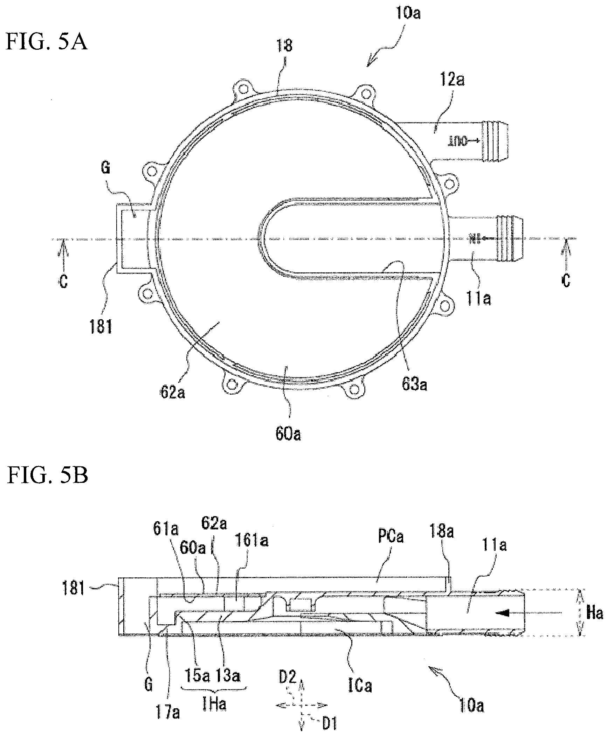

Next, a case 10a of an electric pump embodying the invention will be described. In the case 10a, the same or similar components of the above-described case 10 will be designated with the same or similar reference numerals, and a duplicated description thereof will be omitted. FIG. 5A is a top view of the case 10a according to a variation, and FIG. 5B is a cross-sectional view taken along line C-C in FIG. 5A. FIGs. 5A and 5B illustrate the case 10a before the case 10a is assembled into the case 20 and before a board chamber PCa is filled with the potting resin PR.

An introduction pipe portion 11a extends outwardly in the radial direction D2 from an impeller chamber ICa and extends substantially in parallel with a discharge pipe portion 12a. In a printed circuit board 60a, a cutout portion 63a is linearly formed so as to recede the introduction pipe portion 11a. In addition, the impeller chamber ICa is flat compared to the impeller chamber IC described above. An upper wall portion 13a of an impeller housing portion IHa is also formed substantially parallel to the radial direction D2. The printed circuit board 60a is arranged within the board chamber PCa surrounded by the impeller housing portion IHa, a surrounding wall portion 18a, and the protruding wall portion 181.

In such a configuration, the printed circuit board 60a is arranged within a range of a height Ha from the upper surface 23 of the case 20 to an upper end of the introduction pipe portion 11a in the axial direction D1, faces the impeller housing portion IHa and the introduction pipe portion 11a, and is arranged in the vicinity of the impeller housing portion IHa by the cutout portion 63a. It is thus possible to suppress the increase in size in the axial direction D1 and to suppress the increase in temperature of the printed circuit board 60a and the electronic parts mounted thereon. Further, as not illustrated in FIG. 5B, the number of the electronic parts mounted on a surface 61a of the printed circuit board 60a is larger than that of the electronic part mounted on a surface 62a. It is therefore possible to suppress the increase in temperature of the electronic parts. In addition, since a support pin 161a is formed in the upper wall portion 13a, the printed circuit board 60a can be stably supported, and workability is improved.

While the exemplary embodiment of the present invention has been illustrated in detail, the present invention is not limited to the above-mentioned embodiment, and other embodiments, variations and modifications may be made without departing from the scope of the present invention, which is defined by the appended claims.

Although the printed circuit boards 60 and 60a each have a substantially circular shape, the present invention is not limited thereto. Also, the shapes of the cutout portions 63 and 63a are not limited to the illustrated examples. The electronic part may be mounted on the surface 62a as long as the number of the electronic parts mounted on the surface 61a of the printed circuit board 60a is larger than the number of the electronic parts mounted on the surface 62a. In the above-described embodiment, the arrangements of the printed circuit board 60a itself in the above way suppresses the increase in temperature thereof. Thus, even if there is an electronic part mounted on, for example, the surface 62a, the increase in temperature of the electronic part is also suppressed. Further, the printed circuit board 60a may be arranged above the introduction pipe portion 11a.

## Claims

1. An electric pump (1) comprising:
a motor (M);
an impeller (48) rotated by the motor (M);
a motor housing portion (RH) that houses the motor (M);
an impeller housing portion (IHa) that houses the impeller (48) and is positioned at one side with respect to the motor housing portion (RH) in a rotational axis direction (D1) of the motor (M);
an introduction pipe portion (11a) that introduces a fluid into the impeller housing portion (IHa) and is positioned at the one side with respect to the motor housing portion (RH);
a discharge pipe portion (12a) that discharges the fluid from the impeller housing portion (IHa);
a printed circuit board (60a) electrically connected to a coil (34) of the motor (M) and positioned at the one side with respect to the motor housing portion (RH); and
an electronic part (E1, E2, E3) mounted on the printed circuit board (60a),
wherein:
the printed circuit board (60a) faces the impeller housing portion (IHa) and is positioned at the one side with respect to the impeller (48);
the discharge pipe portion (12a) is positioned at the one side with respect to the motor housing portion (RH) ;
the printed circuit board (60a) faces the discharge pipe portion (12a);
the introduction pipe portion (11a) and the impeller housing portion (IHa) are integrally formed with each other; and
the introduction pipe portion (11a) extends substantially in parallel with the discharge pipe portion (12a) and outwardly in a radial direction from an impeller chamber (ICa) defined by the impeller housing portion (IHa).

2. The electric pump (1) according to claim 1, wherein the impeller housing portion (IHa) is provided with a board supporting portion (161a) that supports the printed circuit board (60a).

3. The electric pump (1) according to claim 1 or 2, wherein
the motor (M) includes:
the coil (34);
an iron core (30) around which the coil (34) is wound; and
a rotor (R) that rotates when the coil (34) is energized and the iron core (30) is excited,
the motor housing portion (RH) includes a peripheral wall portion (25) that surrounds the rotor (R), and
the coil (34) and the iron core (30) are buried in the peripheral wall portion (25) of the motor housing portion (RH).

4. The electric pump (1) according to any one of claims 1 to 3, wherein
the number of electronic parts mounted on a surface (61a) of the printed circuit board (60a), at a side of the motor housing portion (RH), is larger than the number of electronic parts mounted on another surface (62a) of the printed circuit board (60a) opposite to the surface (61a).

## Patentansprüche

1. Elektrische Pumpe (1), umfassend:
einen Motor (M);
ein Laufrad (48), das von dem Motor (M) gedreht wird;
einen Motorgehäuseabschnitt (RH), der den Motor (M) aufnimmt;
einen Laufradgehäuseabschnitt (IHa), der das Laufrad (48) aufnimmt und an einer Seite in Bezug auf den Motorgehäuseabschnitt (RH) in einer Richtung (D1) einer Drehachse des Motors (M) positioniert ist;
einen Einleitungsrohrabschnitt (11a), der ein Fluid in den Laufradgehäuseabschnitt (IHa) einleitet und an der einen Seite in Bezug auf den Motorgehäuseabschnitt (RH) positioniert ist;
einen Abflussrohrabschnitt (12a), der das Fluid aus dem Laufradgehäuseabschnitt (IHa) abführt;
eine Leiterplatte (60a), die elektrisch mit einer Spule (34) des Motors (M) verbunden ist und an der einen Seite in Bezug auf den Motorgehäuseabschnitt (RH) positioniert ist; und
ein elektronisches Teil (E1, E2, E3), das an der Leiterplatte (60a) montiert ist,
wobei:
die Leiterplatte (60a) dem Laufradgehäuseabschnitt (IHa) zugewandt ist und an der einen Seite in Bezug auf das Laufrad (48) positioniert ist;
der Auslassrohrabschnitt (12a) an der einen Seite in Bezug auf den Motorgehäuseabschnitt (RH) positioniert ist;
die Leiterplatte (60a) dem Auslassrohrabschnitt (12a) zugewandt ist;
der Einleitungsrohrabschnitt (11a) und der Laufradgehäuseabschnitt (IHa) einstückig miteinander gebildet sind; und
sich der Einleitungsrohrabschnitt (11a) im Wesentlichen parallel zu dem Auslassrohrabschnitt (12a) und in einer radialen Richtung nach außen von einer Laufradkammer (ICa) erstreckt, die von dem Laufradgehäuseabschnitt (IHa) definiert ist.

2. Elektrische Pumpe (1) nach Anspruch 1, wobei der Laufradgehäuseabschnitt (IHa) mit einem Platinentragabschnitt (161a) versehen ist, der die Leiterplatte (60a) trägt.

3. Elektrische Pumpe (1) nach Anspruch 1 oder 2, wobei der Motor (M) Folgendes beinhaltet:
die Spule (34);
einen Eisenkern (30), um den die Spule (34) gewickelt ist; und einen Rotor (R), der sich dreht, wenn die Spule (34) bestromt und der Eisenkern (30) erregt wird,
der Motorgehäuseabschnitt (RH) einen Umfangswandabschnitt (25) beinhaltet, der den Rotor (R) umgibt, und
die Spule (34) und der Eisenkern (30) in dem Umfangswandabschnitt (25) des Motorgehäuseabschnitts (RH) eingelassen sind.

4. Elektrische Pumpe (1) nach einem der Ansprüche 1 bis 3, wobei die Anzahl der elektronischen Teile, die an einer Oberfläche (61a) der Leiterplatte (60a) an einer Seite des Motorgehäuseabschnitts (RH) montiert ist, größer ist als die Anzahl der elektronischen Teile, die an einer anderen Oberfläche (62a) der Leiterplatte (60a), der Oberfläche (61a) entgegengesetzt montiert ist.

## Revendications

1. Pompe électrique (1) comprenant :
un moteur (M) ;
une roue (48) entraînée en rotation par le moteur (M) ;
une partie de boîtier de moteur (RH) qui loge le moteur (M) ; une partie de boîtier de roue (IHa) qui loge la roue (48) et est positionnée au niveau d'un côté par rapport à la partie de boîtier de moteur (RH) dans une direction d'axe de rotation (D1) du moteur (M) ;
une partie de tuyau d'introduction (11a) qui introduit un fluide dans la partie de boîtier de roue (IHa) et est positionnée au niveau du côté par rapport à la partie de boîtier de moteur (RH) ;
une partie de tuyau d'évacuation (12a) qui évacue le fluide de la partie de boîtier de roue (IHa) ;
une carte de circuit imprimé (60a) connectée électriquement à une bobine (34) du moteur (M) et positionnée au niveau du côté par rapport à la partie de boîtier de moteur (RH) ; et
une pièce électronique (E1, E2, E3) montée sur la carte de circuit imprimé (60a),
dans laquelle :
la carte de circuit imprimé (60a) fait face à la partie de boîtier de roue (IHa) et est positionnée d'un côté par rapport à la roue (48) ;
la partie de tuyau d'évacuation (12a) est positionnée d'un côté par rapport à la partie de boîtier de moteur (RH) ;
la carte de circuit imprimé (60a) fait face à la partie de tuyau d'évacuation (12a) ;
la partie de tuyau d'introduction (11a) et la partie de boîtier de roue (IHa) sont formées d'un seul tenant l'une avec l'autre ; et
la partie de tuyau d'introduction (11a) s'étend sensiblement parallèlement à la partie de tuyau d'évacuation (12a) et vers l'extérieur dans une direction radiale à partir d'une chambre de roue (ICa) définie par la partie de boîtier de roue (IHa).

2. Pompe électrique (1) selon la revendication 1, dans laquelle la partie de boîtier de roue (IHa) est pourvue d'une partie de support de carte (161a) qui supporte la carte de circuit imprimé (60a) .

3. Pompe électrique (1) selon la revendication 1 ou 2, dans laquelle :
le moteur (M) comporte :
la bobine (34) ;
un noyau de fer (30) autour duquel la bobine (34) est enroulée ; et
un rotor (R) qui tourne lorsque la bobine (34) est excitée et que le noyau de fer (30) est excité,
la partie de boîtier de moteur (RH) comporte une partie de paroi périphérique (25) qui entoure le rotor (R), et
la bobine (34) et le noyau de fer (30) sont noyés dans la partie de paroi périphérique (25) de la partie de boîtier de moteur (RH) .

4. Pompe électrique (1) selon l'une quelconque des revendications 1 à 3, dans laquelle
le nombre de composants électroniques montés sur une surface (61a) de la carte de circuit imprimé (60a), sur un côté de la partie de boîtier de moteur (RH), est supérieur au nombre de composants électroniques montés sur une autre surface (62a) de la carte de circuit imprimé (60a) opposée à la surface (61a).
